(19) Europäisches Patentamt / European Patent Office / Office européen des brevets

(11) **EP 4 413 346 B1**

(12) **EUROPEAN PATENT SPECIFICATION**

(45) Date of publication and mention
of the grant of the patent:
**09.07.2025  Bulletin 2025/28**

(21) Application number: **22802740.5**

(22) Date of filing: **04.10.2022**

(51) International Patent Classification (IPC):
*G01M 5/00* *(2006.01)*

(52) Cooperative Patent Classification (CPC):
**G01M 5/0041**

(86) International application number:
**PCT/IT2022/050268**

(87) International publication number:
**WO 2023/058075 (13.04.2023 Gazette 2023/15)**

(54) **MONITORING OF A STRUCTURE BASED ON DYNAMIC MODELS OF ITS PARAMETERS**

ÜBERWACHUNG EINER STRUKTUR AUF BASIS DYNAMISCHER MODELLE SEINER PARAMETER

SURVEILLANCE D'UNE STRUCTURE BASÉE SUR DES MODÈLES DYNAMIQUES DE SES PARAMÈTRES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.10.2021  IT 202100025391**

(43) Date of publication of application:
**14.08.2024  Bulletin 2024/33**

(73) Proprietor: **Università degli Studi di Milano - Bicocca**
**20126 Milano (IT)**

(72) Inventors:
• **FERSINI, Elisabetta**
**20126 Milano (IT)**
• **CANDELIERI, Antonio**
**20126 Milano (IT)**

(74) Representative: **Pezzoli, Ennio et al**
c/o Maccalli & Pezzoli S.r.l.
**Via Settembrini 40**
**20124 Milano (IT)**

(56) References cited:
**US-A1- 2018 313 725**

**Description**

Technical field

The present invention relates to the field of structural control. More specifically, this invention relates to the monitoring of structures.

Background

The background of the present invention is introduced hereinafter with the discussion of techniques relating to its context. However, even when this discussion refers to documents, acts, artifacts and the like, it does not suggest or represent that the discussed techniques are part of the prior art or are common general knowledge in the field relevant to the present invention.

Various systems (and in particular human artifacts) are provided with a resisting/bearing structure, or simply structure, which supports the loads and the external actions to which the system is subjected. Typical examples in the construction field are the structures of constructions. In general, the constructions are human works immobilized on the ground in a solid and stable way (such as bridges, buildings, dams and so on); particularly, the constructions may be part of infrastructures that organize a territory for the performance of human activities (such as roads, railways, telecommunication networks and the like).

Any structure is inevitably destined to deteriorate over time; for example, this is due to decay of properties and geometric variations of components, wear of members, traumatic events and so on. The deterioration of the structure causes damages that adversely impact its functionality, to the point of completely compromising it; this may generate dangerous situations, which may also lead to catastrophic events (such as in the case of building collapses).

As a result, the structures are generally subjected to a monitoring process. The monitoring of each structure provides for its continuous vigilance in order to foresee damages that might be caused to the structure, or at least to identify damages that have already occurred to the structure but still at an early stage. This allows intervening promptly before dangerous situations might occur. For example, it is possible to perform maintenance operations on the structure to restore or maintain its efficiency; in extreme cases, it is also possible to simply interdict the use of the structure, until it has been made safe (at most, with the complete replacement of the structure).

In its simplest form, the monitoring of the structure is based on a visual analysis thereof; however, this provides very rough results.

In most cases, the monitoring of the structure instead involves the continuous collection of information relating to the structure. For example, various sensors may be used to measure corresponding parameters of the structure (such as vibrations, displacements and so on). The measured values of the parameters may then be compared with threshold values thereof to signal possible anomalous conditions upon reaching them. However, this technique is applicable only to very simple cases, since very often in practice the single parameters are not significant by themselves.

In recent years, analysis techniques have also been proposed aimed at determining anomalous conditions automatically; for example, the analysis techniques may be based on statistical models applied to the measured values of the parameters. However, this is a rather daunting task. In fact, the measurements of the parameters greatly impact the obtained results (for example, according to their number, type, frequency, position, and so on). Moreover, the measured values of the parameters strongly depend on environmental conditions. In any case, each analysis technique is specific to a particular application.

As a consequence, direct verifications of each structure by specialized (human) personnel remain essential. In general, the (direct) verifications are performed periodically with a predefined frequency.

However, these operations are time-consuming and expensive. It follows that if the verifications are performed too frequently (to ensure a high level of safety) this may result in a waste of time and money. Conversely, if the verifications are performed too infrequently (to ensure a low level of expenditure) this may lead to the missing prompt detection of dangerous situations.

In any case, regardless of the frequency with which the verifications are performed, it is however possible that damages to the structure occur suddenly. Therefore, if the monitoring of the structure does not identify such damages, they remain until the next verification of the structure (with a serious risk to safety); on the contrary, if the monitoring of the structure provides false alarms, this involves unnecessary verifications of the structure (with an increase of costs).

US-A-2018/0313725 discloses a diagnostic apparatus of simple devices, such as a battery. This document expressly proposes to use a single sensor, which measures a heat flux. The measured values of the heat flux are compared with a specification range and a control range; these ranges are predefined (for example, they extend around a correct value of the heat flux, which increases linearly over time with a fixed rate). The specification range and the control range are simply used to provide different alerts. Particularly, when the measured values are outside the specification range but within the control range, the diagnostic apparatus signals an anomalous state, whereas when the measured values are outside the control interval as well, the diagnostic apparatus signals a deteriorated state.

Summary

A simplified summary of the present invention is herein presented in order to provide a basic understanding thereof; however, the sole purpose of this summary is to introduce some concepts of the invention in a simplified form as a prelude to its following more detailed description, and it is not to be interpreted as an identification of its key elements nor as a delineation of its scope.

In general terms, the present invention is based on the idea of using dynamic parameter models.

In particular, an aspect provides a method for monitoring a structure. The method comprises estimating predicted values of parameters relating to the structure by means of corresponding local models applied to measured values of the parameters. Each measured value is classified as normal, unexpected or anomalous according to corresponding ranges around its predicted value. The local model of each parameter is adapted, in response to one or more unexpected measured values of the parameter, according to its normal measured values.

A further aspect provides a computer program (software) for implementing the method.

A further aspect provides a computing system for performing the method.

A further aspect provides a monitoring system comprising the computing system.

More specifically, one or more aspects of the present invention are set out in the independent claims and advantageous features thereof are set forth in the dependent claims, with the wording of all the claims that is incorporated herein *verbatim* by reference (with any advantageous feature provided with reference to each specific aspect that applies *mutatis mutandis* to every other aspect).

Brief description of the figures

The solution of the present invention, as well as further features and the advantages thereof, will be better understood with reference to the following detailed description thereof, provided purely by way of a non-restrictive indication, to be read in conjunction with the accompanying drawings (wherein, for the sake of simplicity, corresponding elements are denoted with equal or similar references and their explanation is not repeated, and the name of each entity is generally used to denote both its type and its attributes, like value, content and representation). Particularly:

FIG.1A-FIG.1F show the general principles of the solution according to an embodiment of the present invention,
FIG.2 shows a functional block diagram of a monitoring system that may be used to practice the solution according to an embodiment of the present invention,
FIG.3 shows the main software components that may be used to implement the solution according to an embodiment of the present invention, and
FIG.4A-FIG.4B show an activity diagram describing the flow of activities relating to an implementation of the solution according to an embodiment of the present invention.

Detailed description

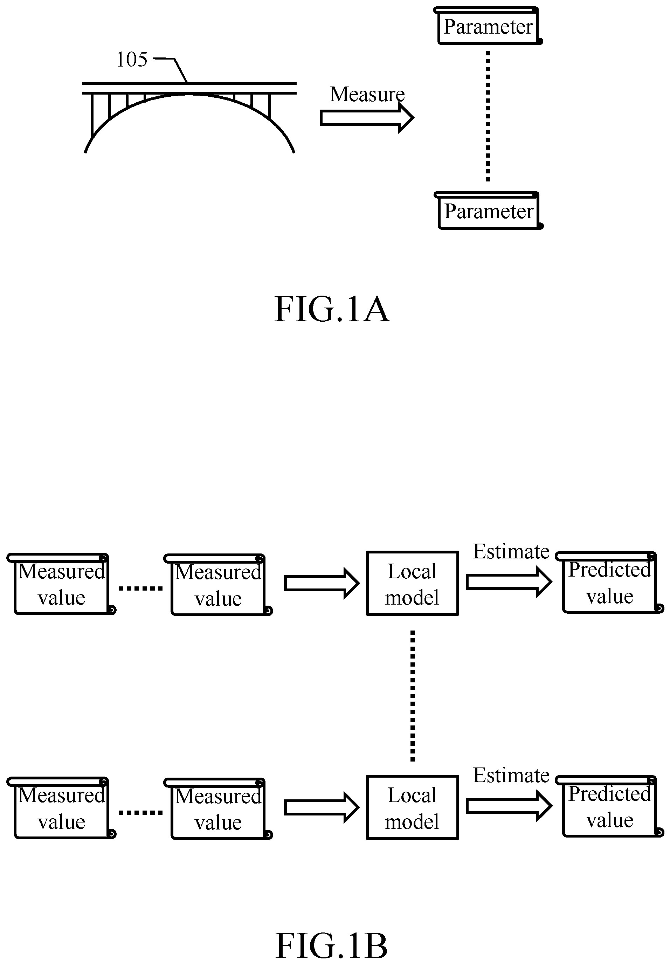

With reference in particular to FIG.1A-FIG.1F, the general principles are shown of the solution according to an embodiment of the present invention.

Starting from FIG.1A, a structure 105 is subjected to a monitoring process (to foresee, or at least promptly identify, damage to it); for example, the structure 105 supports a construction, particularly forming part of an infrastructure (a bridge in the figure). One or more parameters relating to the structure (for example, state parameters and environmental parameters) are measured continually by means of corresponding sensors (not shown in the figure); particularly, each sensor provides a series of measured values of the corresponding parameter at successive measurement instants (for example, periodically).

Moving to FIG.1B, corresponding predicted values of the parameters are estimated for each (current) measurement instant through (current versions of) local models thereof, for example, Bayesian regression models; particularly, the predicted value of each parameter is estimated by applying the measured values of the parameter (or part of them) to the local model of the parameter. The predicted value for each measurement instant indicates the value that the parameter is expected to take at that measurement instant, and then the measured value should have at the same measurement instant, in a normal condition of the structure.

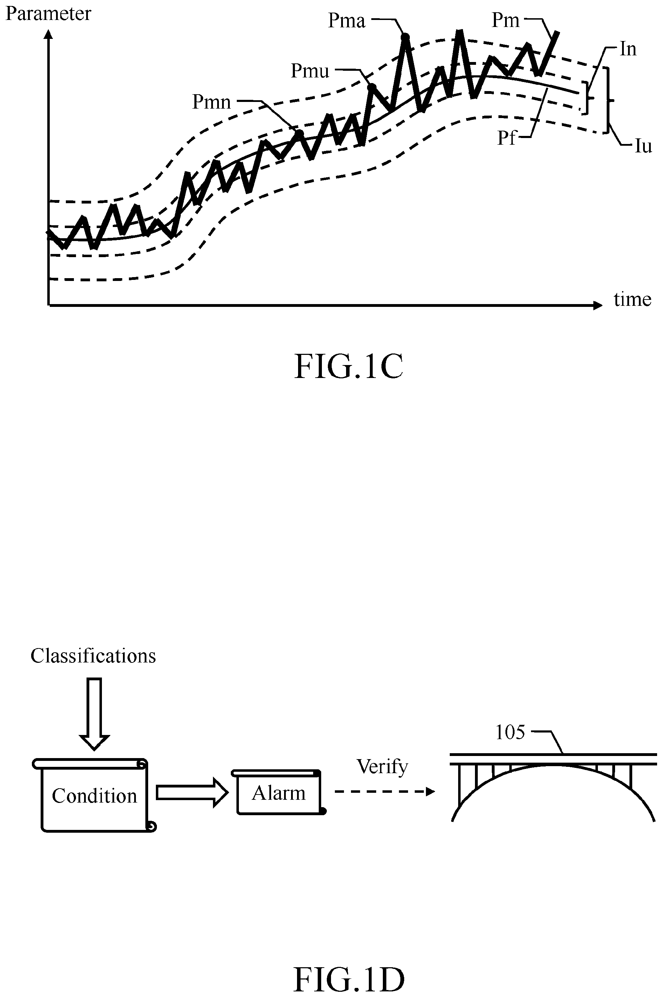

Moving to FIG.1C, in the solution according to an embodiment of the present invention, corresponding classification indicators of the measured values of the parameters (for each measurement instant) are determined. The classification indicators of each parameter classify its measured values as normal, unexpected or anomalous according to their deviation from the corresponding predicted values; particularly, each measured value is considered normal when the deviation is so low to be considered physiological, unexpected when the deviation is not so low to be considered physiological but not so high to cause concern of a dangerous situation or anomalous when the deviation is so high to cause concern of a dangerous situation. For this purpose, a normal range and an unexpected range are defined for each measurement instant (depending on the corresponding predicted values of the parameters for the measurement instant). The above quantities are graphically represented in the diagram of the figure, which plots the (measured/estimated) values of a generic parameter on the ordinate axis as a function of time on the abscissa axis (in arbitrary units). Particularly, a thick solid-line curve and a thin solid-line curve represent the measured values Pm and the predicted values Pf, respectively, of the parameter at different measurement instants over time; corresponding pairs of dashed-line curves instead represent the normal range In and the unexpected range Iu at the same measurement instants over time. At each measurement instant, the normal range In is defined in such a way to contain the predicted value Pf for the same measurement instant (for example, extending around it by a value depending on the standard deviation of the measured values Pm, or part of them, classified as normal); moreover, the unexpected range Iu is defined in such a way to contain the normal range In for the same measurement instant (for example, extending around the predicted value Pf by another value greater than the previous one). At each measurement instant, the measured value Pm is classified as normal when within the normal range In, as unexpected when outside the normal range In and within the unexpected range Iu or as anomalous when outside the unexpected range Iu (for the measurement instant). An example of a normal measured value, an example of an unexpected measured value and an example of an anomalous measured value are indicated in the figure with the references Pmn, Pmu and Pma, respectively.

Moving to FIG.1D, a condition of the structure 105 at the measurement instant is estimated according to classification indicators of the parameters (or part of them), for example, by means of a neural network and an agent-based model that learns by reinforcement a decision-making policy based on logistic regression. Particularly, an anomalous condition of the structure is determined according to one or more anomalous values of the parameters; in this case, an alarm notification is issued, for example, by sending a corresponding message to specialized (human) personnel. This causes a (direct) verification of the structure 105 by the specialized personnel to assess its actual condition.

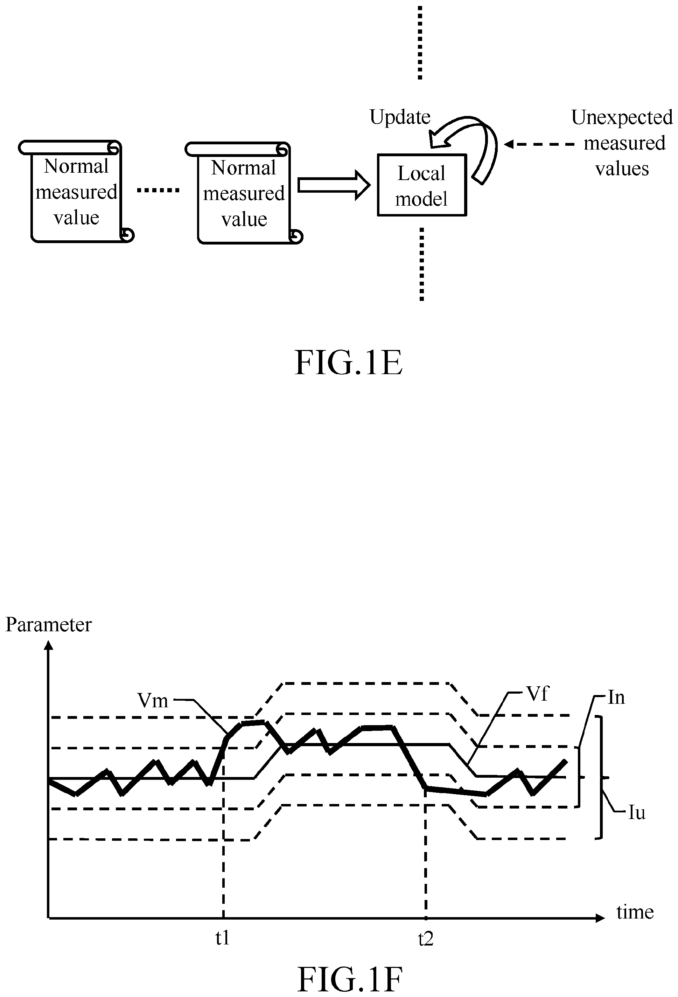

Moving to FIG.1E, in the solution according to an embodiment of the present invention, the local model of each parameter is updated in response to an adaptation condition, which is determined according to one or more unexpected measured values of the parameter (for example, multiple consecutive unexpected measured values); particularly, the local model is updated according to the normal measured values (or part of them) of the parameter. In fact, the unexpected measured values indicate that the deviation of the measured values from the predicted values of the parameter is not so low to be considered physiological but not so high to cause concern of a dangerous situation. This may be due to the fact that the local model has become ineffective or that the structure is moving from the normal condition towards the anomalous condition. In the first case, the local model is updated, so as to restore its capability of estimating the predicted values of the parameter correctly; in the second case, the local model remains substantially unchanged, so that this operation has substantially no effect on its capability of detecting any anomalous measured values in the future.

The above-described solution is self-adapting (substantially in real time) to the different conditions of the structure to be monitored (for example, environmental, use, aging and so on conditions). This greatly improves the capability of determining actual anomalous conditions of the structure automatically.

Particularly, the proposed solution allows predicting (in a completely automatic way) damages that might be caused to the structure, or at least to identify damages that have already occurred to the structure but still at an early stage, with high accuracy; in this way, it is possible to intervene promptly before dangerous situations might occur (with a significant increase of safety). At the same time, the proposed solution avoids (or at least substantially reduces) false alarms; in this way, unnecessary verifications of the structure are avoided as a consequence (with considerable economic savings).

Moreover, the above-described solution is self-adapting to different types of structures. This makes the solution of general use.

For example, in FIG.1F a further diagram is shown that plots the measured values Vm and the predicted values Vf of the vibration of a building on the ordinate axis as a function of time on the abscissa axis (in arbitrary units), with the relative normal range In and unexpected range Iu. Initially, the measured values Vm of the vibration are normal. At a certain measurement instant t1, a tram passes close to the building; this causes an increase of the vibration of the building, whose measured values become unexpected. In response thereto, the corresponding local model of the vibration is updated, thereby restoring its capability of estimating the predicted values of the vibration even in the presence of the tram. As a result, the measured values of the vibration (albeit higher) are normal again. At a subsequent measurement instant t2, the tram has moved away from the building; the vibration of the building returns lower, so that its measured values become unexpected again. In response thereto, the corresponding local model of the vibration is updated once more, thereby restoring its capability of estimating the predicted values of the vibration without the tram. As a result, the measured values of the vibration return normal.

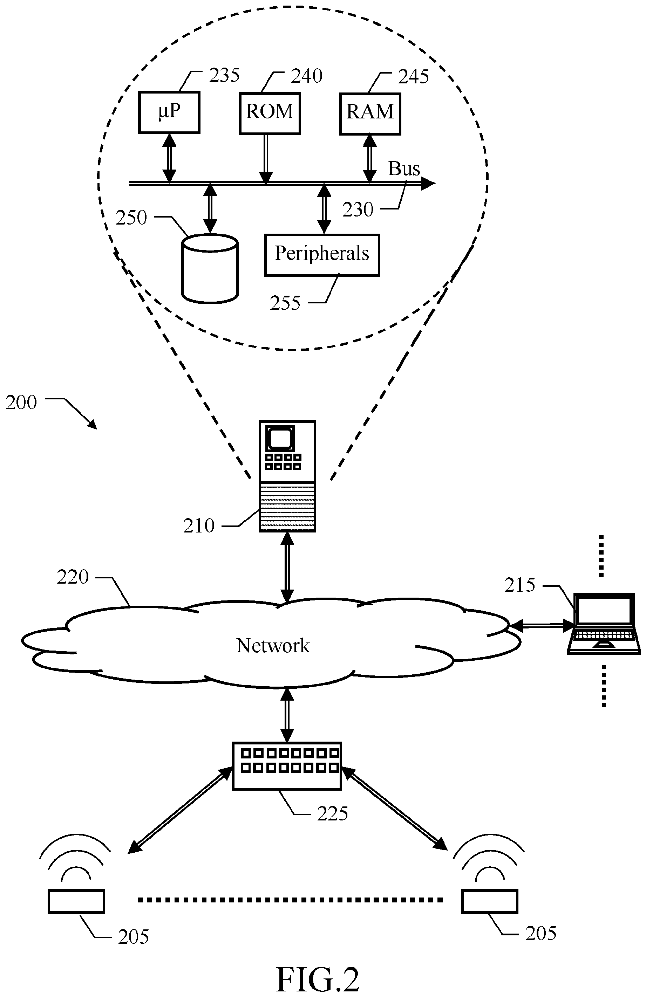

Referring now to FIG.2, a functional block diagram is shown of a monitoring system 200 that may be used to practice the solution according to an embodiment of the present invention.

The monitoring system 200 comprises the following components. One or more (physical) sensors 205 are associated with the structure to be monitored (not shown in the figure) for measuring the parameters relating thereto, for example, integrated in, mounted on or arranged close to it. For example, the sensors 205 are adapted to measuring state parameters of the structure (such as accelerometers, proximity probes, velocimeters and so on) and/or environmental parameters relating to the structure (such as thermometers, manometers, hygrometers, seismographs and so on); examples of such parameters are vibrations, displacements, their components in different directions, temperature, humidity, pressure and so on. A central computing system, or computer, 210 (for example, a server) implements the processing operations required to monitor the structure. The central computer 210 may be installed in an operations center for providing alarm notifications to the specialized personnel directly; in addition or in alternative, one or more computing systems, or personal computers 215 (for example, PCs) are supplied to the specialized personnel for receiving the alarm notifications provided by the central computer 210. The sensors 205, the central computer 210 and the personal computers 215 communicate among them over a (telecommunication) network 220, for example, based on the Internet; particularly, the central computer 210 and the personal computers 215 connect directly to the network 220, while the sensors 205 are connected to a concentrator 225, which manages their connection to the network 220. In this way, the structure may be monitored remotely (in the operations center and possibly at any position of the specialized personnel). Moreover, not shown in the figure, the monitoring system 200 may be extended to monitor more structures in a centralized way (with the addition of the corresponding concentrators each with the relative sensors) by the same central computer 210 and/or to notify more specialized personnel (with the addition of the corresponding personal computers 215). All of this makes the above-described solution easily scalable for adapting to different entities and their changes over time (of the structures to be monitored and/or of the specialized personnel).

The central computer 210 comprises several units that are connected among them through a bus structure 230 at one or more levels. Particularly, a microprocessor ($\mu$P) 235, or more, provides the logic capability of the central computer 210; a nonvolatile memory (ROM) 240 contains basic code for a bootstrap of the central computer 210 and a volatile memory (RAM) 145 is used as a working memory by the microprocessor 235. The central computer 210 is provided with a mass-memory 250 for storing programs and data (for example, a Solid State Disk, or SSD). Moreover, the central computer 100 comprises a number of controllers for peripherals, or Input/Output (I/O) units, 255; for example, the peripherals 255 comprise a keyboard, a mouse, a monitor, a network card for connecting the central computer 210 to the network 220 and a port for reading/writing removable storage units (such as of USB type).

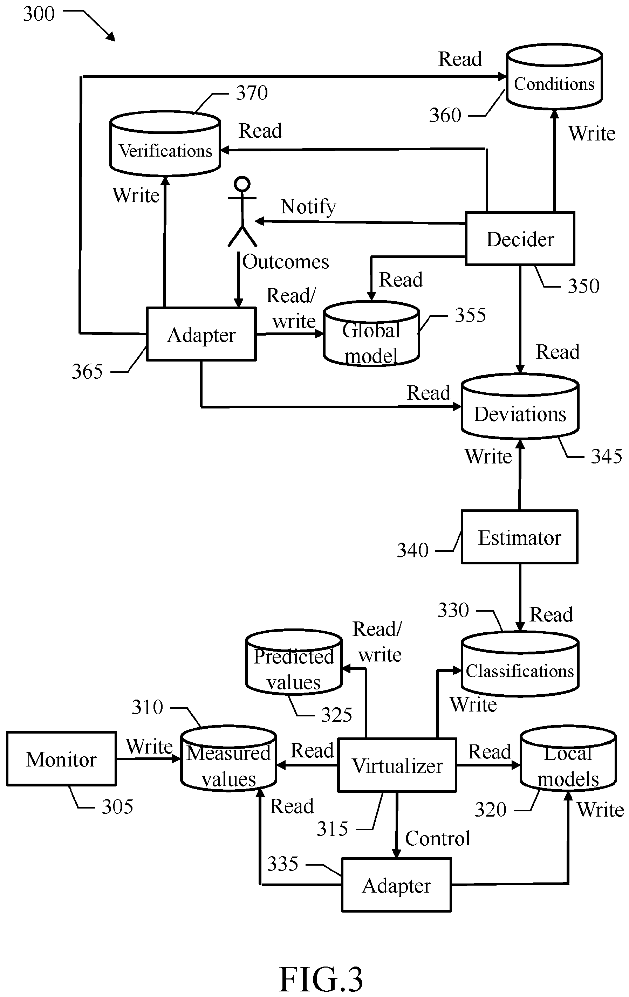

With reference now to FIG.3, the main software components are shown that may be used to implement the solution according to an embodiment of the present invention.

Particularly, all the software components (programs and data) are denoted as a whole with the reference 300. The software components are typically stored in the mass memory and loaded (at least partially) into the working memory of the central computer when the programs are running, in addition to an operating system and to other application programs (not shown in the figure). The programs are initially installed into the mass memory, for example, from removable storage units or from the network. In this respect, each program may be a module, segment or portion of code, which comprises one or more executable instructions for implementing the specified logical function.

A monitor 305 receives the measured values of the parameters from the corresponding sensors (not shown in the figure). The monitor 305 writes a measurements repository 310. The measurements repository 310 stores the measured values of the parameters. For example, the measurements repository 310 has an entry for each parameter measured by a corresponding sensor; the entry contains a measurements register of FIFO type that stores the most recent measured values of the parameter. Particularly, denoting with *Nm* the depth of the measurements register (for example, *Nm* = 10,000-30,000, such as 20,000), $t_i$ the measurement instants (with *i=0...-Nm+1,* from $t_0$ to $t_{-Nm+1}$ back over time in a corresponding measurements window) and $Pm_i$ the measured value at the *i-th* measurement instant $t_i$, after each (current) measurement instant $t_0$ the measurements register will contain the measured values:

$$Pm_0, Pm_{-1}, Pm_{-2} \ldots Pm_{-Nm+2}, Pm_{-Nm+1}.$$

A virtualizer 315 extends the functionality of the (physical) sensors by simulating corresponding (virtual) sensors. The virtualizer 315 reads the measurements repository 310 and a local models repository 320. The local models repository 320 defines the local models of the sensors (used to estimate the predicted values of the corresponding parameters). For this purpose, the local models repository 320 has an entry for each parameter, which stores a definition of the corresponding local model. For example, the local model is chosen as the one that best suits the measured values of the parameter among a plurality of different models (such as four) trained for this purpose; in any case, the optimal hyper-parameters of the local model are estimated by using a parallel optimization strategy based on Bayesian global optimization with surrogate model based on Gaussian processes. The virtualizer 315 reads/writes a prediction repository 325. The prediction repository 325 stores the predicted values of the parameters. For example, the prediction repository 325 has an entry for each parameter; the entry contains a predictions register of FIFO type that stores the most recent predicted values of the parameter. Particularly, denoting with *Nf* the depth of the predictions register (for example, with

$Nf$=1.000-3.000, such as $Nf$=2.000), with $t_i$ the measurement instants (with $i=0...-Nf+1$ from $t_0$ to $t_{-Nf+1}$ back over time in a corresponding predictions window) and with $Pf(t_i)$ the predicted value for the *i-th* measurement instant $t_i$, for each current measurement instant $t_0$ the predictions register will contain the predicted values:

$$Pf_0, Pf_{-1}, Pf_{-2} ... Pf_{-Nf+2}, Pf_{-Nf+1}.$$

The predictions register is synchronous with the corresponding measurements register (in the measurements repository 310); particularly, for each measurement instant $t_i$ of the predictions register ($i \leq Nf+1$), the measurements register contains the measured value $Pm(t_i)$ at the measurement instant $t_i$ and the predictions register contains the predicted value $Pf(t_i)$ for the same measurement instant $t_i$. The virtualizer 315 writes a classifications repository 330. The classifications repository 330 stores the classification indicators of the parameters, *i.e.,* of their measured values with respect to the corresponding predicted values. For example, the classifications repository 330 has an entry for each parameter; the entry contains a classifications register of FIFO type that stores the most recent classification indicators of the parameter; particularly, denoting with $Nc$ the depth of the classifications register (for example, with $Nc=Nf$), with $t_i$ the measurement instants (with $i=0...-Nc+1$, from $t_0$ to $t-N_{c+1}$ back over time in a corresponding classifications window) and with $Cl(t_i)$ the classification indicator "normal" , "unexpected" or "anomalous") of the measured value $Pm(t_i)$ with respect to the predicted value $Pf(t_i)$ for the *i-th* measurement instant $t_i$, for each current measurement instant $t_0$ the classifications register will contain the classification indicators:

$$Cl_0, Cl_{-1}, Cl_{-2} ... Cl_{-Nf+2}, Cl_{-Nf+1}.$$

The virtualizer 315 controls a (local) adapter 335. The adapter 335 adapts the local models of the sensors. For this purpose, the adapter 335 reads the measurements repository 310 and it writes the local models repository 320.x

An estimator 340 estimates how much the measured values of each parameter deviate from its predicted values for the current measurement instant. The estimator 340 reads the classifications repository 330 and it writes a deviations repository 345. The deviations repository 345 contains an entry for each parameter, which stores a deviation indicator of the measured values of the parameter from their predicted values for the current measurement instant (for example, from 0 to 1 for increasing deviations); particularly, denoting with $Is_j$ the deviation indicator for the *j-th* parameter (with $j=1...Np$, $Np$ being the number of parameters), for each current measurement instant the deviations repository will contain the deviation indicators:

$$Is_0, Is_1, Is_2 ... Is_{Np-1}, Is_{Np}.$$

For example, the estimator 340 is implemented by means of an (artificial) neural network. In general, a neural network is a structure that approximates the functioning of the human brain. The neural network comprises basic processing elements (neurons) that perform operations based on corresponding weights; the neurons are connected via one-way channels (synapses) that transfer data between them. The neurons are organized in layers that perform different operations. Particularly, an input layer and an output layer receive input data and provide output data, respectively, of the neural network. In the case at issue, the input data of the neural network 340 are the classifications indicators of the parameters for the current measurement instant, whereas the output data are the deviation indicators of the parameters for the current measurement instant. In an embodiment of the present invention, the neural network 340 is of deep type, with one or more deep layers that are hidden between the input layer and the output layer. Particularly, in the (deep) neural network 340 the synapses define rings that allow using data in input being generated in output (generally, transferring them in feedback with respect to a processing flow from the input layer to the output layer); this provides a memory capacity to the neural network, whereby the output data is dependent on both current and previous input data. In the specific case, the neural network 340 makes the deviation indicators for the current measurement instant dependent on the corresponding classification indicators in the classifications window. For example, the neural network 340 is based on Long Short Term Memory (LSTM) units. Each LSTM unit comprises a cell with an input port, an output port and a forget port that control the data stored in the cell, *i.e.,* their addition, use and removal, respectively; this allows maintaining the data for any length of time. More specifically, the neural network 340 is a Variational AutoEncoder (VAE). An auto-encoder comprises an encoder that compacts the data into a denser form (in a so-called latent space). The data so compacted are used to perform the desired operations. A decoder then expands the obtained result into a required more extended form. In a variational auto-encoder, the encoder compacts the data at the level of their statistical distribution (in terms of mean and standard deviation). For example, the neural network 340 comprises in succession (from the initial layer to the final layer) two LSTM layers (which implement the encoder), two dense or fully connected layers (which extract the means and standard deviations), a lambda layer (which reconstructs the statistical distribution from the means and standard deviations and which samples it) and two LSTM layers (which implement the decoder). The neural network 340 is trained using only the normal measured values of the parameters (during a development phase and any subsequent maintenance phases, performed on a dedicated computing system, such as a PC). For example, the weights of the neural network 340 are initialized randomly. The (normal) measured values of the parameters at each measurement instant are applied to the neural network 340 for obtaining the corresponding deviation indicators. The weights of the neural network 340 are updated through an iterative process based on the Stochastic Gradient Descent (SGD) algorithm. For this purpose, after each iteration or at the end of all of them, the weights of the neural network 340 are updated in a direction and by an extent given by the gradient of a loss function that expresses a loss value (given by the difference between the obtained deviation indicators and their expected correct values) as a function of the weights. These operations are repeated until the loss value has become satisfactory or it is no longer significantly improving (adding a random noise and/or repeating the same operations starting from different initializations of the weights for finding different, and possibly better, local minima, and for discriminating flat regions of the loss function).

A decider 350 decides about the opportunity of verifying the structure for the current measurement instant. Particularly, the decider 350 calculates a condition indicator and an alarm indicator for the current measurement instant. The condition indicator quantifies a condition of the structure, normal or anomalous, for example, with a value increasing (such as from 0 to 1) as an anomaly degree of the structure increases; the alarm indicator is a flag that is asserted when an alarm has been notified to cause a (direct) verification of the structure by the specialized personnel. The decider 350 reads the deviations repository 345 and a global model repository 355. The global model repository 355 stores a global model of the structure that is used to estimate the condition indicator. For example, the global model is founded on a system based on agents that learn by reinforcement a decision-making policy based on logistic regression. In general, logistic regression is a non-linear regression model that defines the probability that a dependent variable of binary type takes one of its two possible values as a function of one or more independent variables; in the specific case, the dependent variable is the condition indicator that quantifies the probability (from 0 to 1) that the structure is in the anomalous condition and the independent variables are the deviation indicators (for the current measurement instant). The decider 350 writes a conditions repository 360. The conditions repository 360 comprises an entry for each measurement instant, which stores the condition indicator and the alarm indicator for the measurement instant. The decider 350 is provided with an output interface, for example, an e-mail application, for providing the alarm notifications to the specialized personnel. A (global) adapter 365 adapts the global model. For example, the adapter 365 is based on a reinforcement learning technique. In general, reinforcement learning is a particular type of machine learning wherein the execution of actions on the external environment for a specific task by an agent is learned automatically (without explicit instructions but inferring it from examples) optimizing a total reward given by the effectiveness of these actions (analogously to the reinforcement of a living organism defined by a consequence to an action of the organism that applied thereto improves its future behavior). In the specific case, wherein the decider 350 (agent) does not act directly on the structure (external environment), the method has been modified by introducing the human intervention to define the reward based on the outcome of the verifications performed on the structure (both in response to the alarm notifications and independently thereof); particularly, the reward is positive (prize) in case of alarm notification with structure found in the anomalous condition or structure found in the normal condition without alarm notification, whereas the reward is negative (penalty) in case of alarm notification with structure found in the normal condition or structure found in the anomalous condition without alarm notification. The adapter 365 is provided with an input interface for receiving corresponding outcome indicators of the verifications of the structure entered manually by the specialized personnel. The outcome indicator of each verification indicates the actual condition of the structure as verified by the specialized personnel (for example, 0 for normal condition and 1 for anomalous condition). The adapter 365 writes a verifications repository 370. The verifications repository 370 contains an entry for each verification of the structure, which stores the outcome indicator thereof. Moreover, the adapter 365 reads the conditions repository 360, reads the deviations repository 345, and reads/writes the global model repository 355.

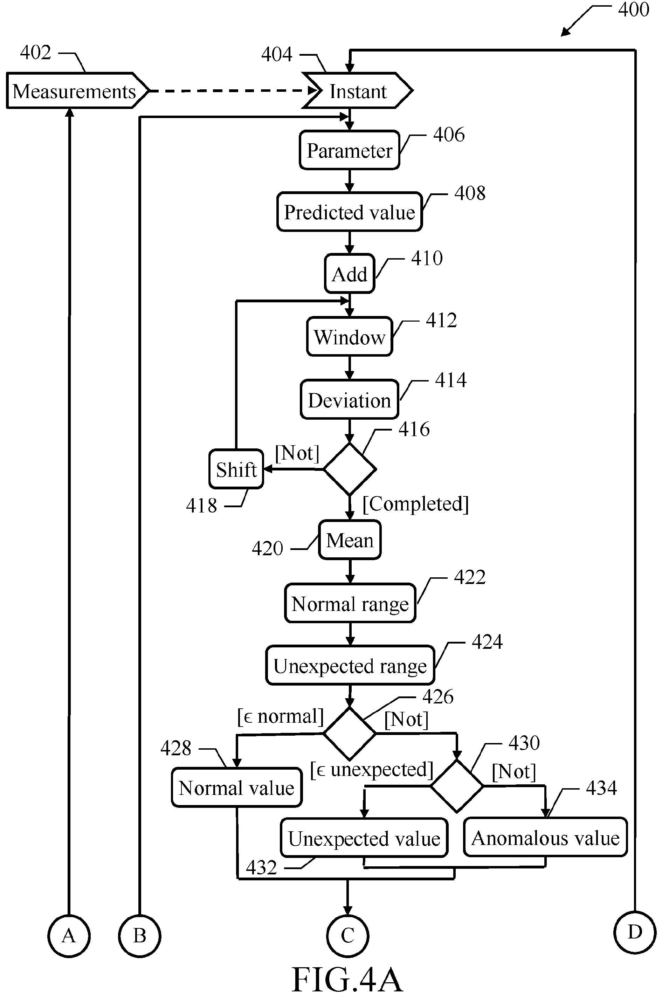

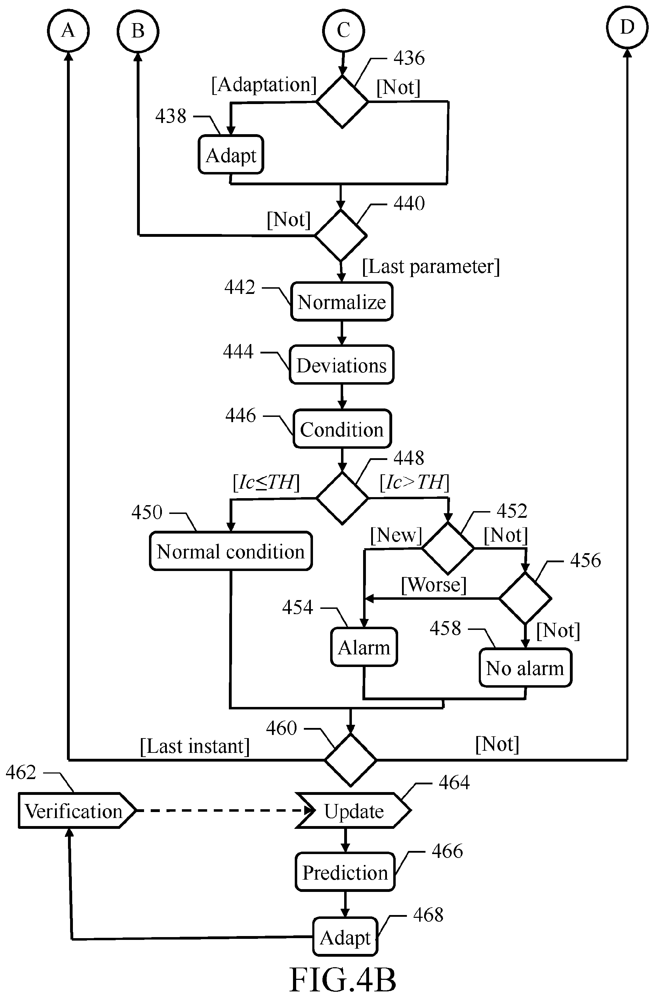

With reference now to FIG.4A-FIG.4B, an activity diagram is shown describing the flow of activities relating to an implementation of the solution according to an embodiment of the present invention.

Particularly, the diagram represents an exemplary process that may be used to monitor the structure with a method 400. In this respect, each block may correspond to one or more executable instructions for implementing the specified logical function on the central computer.

The process passes from block 402 to block 404 whenever a collection event occurs of (new) measured values of the parameters from the corresponding sensors. Particularly, each sensor measures the corresponding parameter continually at successive (new) measurement instants (for example, every 50-200 ms, such as every 100 ms); once a pre-defined number of measurements have been performed (for example, 16-64, such as 32), the sensor sends a packet containing the corresponding (new) measured values to the central computer. In response thereto, a loop is performed for estimating the condition of the structure.

The loop begins by taking into account the new measured values at a corresponding new (current) measurement instant, starting with the oldest one in chronological order. Continuing to block 406, a (current) parameter is taken into account (starting from a first one in any arbitrary order). The virtualizer at block 408 calculates a (new) predicted value of the parameter at the new measurement instant. The new predicted value is obtained by applying the local model of the parameter (in its current version) to the (previous) measured values of the parameter, previously measured in the measurements window (extracted from the corresponding repositories). The virtualizer at block 410 adds the new measured value and the new predicted value (for the new measurement instant) to the measurements register and to the predictions register, respectively, of the parameter (in the corresponding repositories), shifting their contents thereby losing the oldest measured value and predicted value, respectively. The virtualizer now determines the normal range and the unexpected range of the parameter for the new measurement instant. For this purpose, a loop is performed for scanning the measurements register of the parameter through a scanning window, smaller than the measurements window (for example, relating to 50-150, such as 100 measurement instants). The loop begins at block 412, wherein a (current) position of the scanning window is taken into account, starting from a first end of the measurements register (for example, at the new measurement instant). The virtualizer at block 414 calculates the standard deviation of the measured values contained in the scanning window ($\sigma(Pm_i)$), adding it to a corresponding array. The virtualizer at block 416 verifies whether a second end of the measurements register has been reached (corresponding to the oldest measurement instant in the example at issue). If not, the virtualizer at block 418 shifts the scanning window towards the second end of the measurements register (back over time in the example at issue) by a pre-defined stride (for example, by 1-5 measurement instants). The flow of activities then returns to block 412 for repeating the same operations with the new position of the scanning window. Referring again to block 416, once the scanning of the measurements register has been completed with the scanning window reaching the second end of the measurements register, the loop is terminated by passing to block 420. At this point, the virtualizer calculates a basic offset equal to the mean of the above standard deviations ($\mu(\sigma(Pm_i))$), extracted from the corresponding array. The virtualizer at block 422 calculates a normal offset ($\Delta n$) for the new measurement instant, equal to the basic offset multiplied by a normal factor $Fn,$ for example, $Fn$=1-5, such as $Fn$=3 ($\Delta u = Fu \cdot \mu(\sigma(Pm_i))$); the normal range is defined to extend around the new predicted value ($Pf_0$) by the normal offset, $i.e.,$ from $(Pf_0-\Delta n)$ to $(Pf_0+\Delta n)$, for example, extremes included. Likewise, the virtualizer at block 424 calculates an unexpected offset ($\Delta u$) for the new measurement instant, equal to the basic offset multiplied by an unexpected factor $Fu$ greater than the normal factor $Fn$, $i.e.,$ $Fu=\alpha \cdot Fn$ with $\alpha$>1, for example, $\alpha$=2-4, such as $\alpha$=3 ($\Delta u = Fu \cdot \mu(\sigma(Pm_i))$); the unexpected range is defined to extend around the new predicted value by the unexpected offset, $i.e.,$ from $(Pf_0-\Delta u)$ to $(Pf_0+\Delta u)$, for example, extremes included.

The virtualizer at block 426 verifies whether the new measured value ($Pm_0$) falls within the normal range $(Pf_0-\Delta n)-(Pf_0+\Delta n)$. If so, $i.e.,$ if:

$$Pm_0 \geq (Pf_0 - \Delta n) \text{ and } Pm_0 \leq (Pf_0 + \Delta n),$$

the virtualizer at block 428 classifies the new measured value as normal. As a result, the virtualizer sets a (new) classification indicator $Cl_0$="$normal$" (for the new measurement instant); the virtualizer then adds the new classification indicator to the classifications register of the parameter (in the corresponding repository), shifting its content thereby losing the oldest classification indicator. Returning to block 426, if the new measured value does not fall within the normal range, the virtualizer at block 430 verifies whether the new measured value falls within the unexpected range $(Pf_0-\Delta u_0)-(Pf_0+\Delta u_0)$. If so, $i.e.,$ if:

$$[Pm_0 \geq (Pf_0 - \Delta u_0) \text{ and } Pm_0 < (Pf_0 - \Delta n_0)] \text{ or } [Pm_0 \leq (Pf_0 + \Delta u_0) \text{ and } Pm_0 > (Pf_0 - \Delta n_0)],$$

the virtualizer at block 432 classifies the new measured value $Pm_0$ as unexpected. As a result, the virtualizer sets the new classification indicator $Cl_0$= "$unexpected$" and adds it to the classifications register of the parameter as above. Returning to block 430, if the new measured value $Pm_0$ does not fall within the unexpected range $(Pf_0-\Delta u_0)-(Pf_0+\Delta u_0)$, $i.e.,$ if:

$$Pm_0 < (Pf_0 - \Delta u_0) \text{ or } Pm_0 > (Pf_0 - \Delta n_0),$$

the virtualizer at block 434 classifies the new measured value $Pm_0$ as anomalous. As a result, the virtualizer sets the new classification indicator $Cl_0$="$anomalous$" and adds it to the classifications register of the parameter as above. The flow of activity merges at block 436 from block 428, from block 432 or from block 434.

At this point, the (local) adapter verifies an adaptation condition of the local model of the parameter. For example, the adaptation condition is defined by a pre-defined number (for example, 5-15, such as 10) of the most recent classification indicators having the "unexpected" value. If the adaptation condition is satisfied, this means that the local model may no longer be capable of estimating the predicted values with an acceptable level of accuracy (due to variations in a statistical distribution of the measured values). Therefore, the adapter to block 438 adapts the local model accordingly (if necessary). The adaptation of the local model is based on the measured values (from the corresponding measurements register), limited to those that have been classified as "normal" in the classifications window, as indicated by their classification indicators (from the corresponding classifications register). In this way, the local model self-adapts without risking to lose its capability of detecting anomalous measured values of the parameter. For this purpose, the local model is optimized to minimize an estimation error of these normal measured values with respect to the corresponding predicted values (for example, using the least squares method). The process then continues to block 440; the same point is also reached directly from block 436 if the prediction condition is not satisfied (meaning that the local model is capable of estimating the predicted values with an acceptable level of accuracy). At this point, the virtualizer verifies whether a last parameter has been processed for the new measurement instant. If not, the flow of activity returns to block 406 to repeat the same operations for a further parameter.

On the contrary, once all the parameters have been processed for the new measurement instant, the estimator at block 442 extracts the classification indicators of the parameters for the new measurement instant from the classifications registers (of the corresponding repository) and normalizes them to make them dichotomous, with one value (such as 0) for the corresponding normal/unexpected measured value and another value (such as 1) for the corresponding anomalous measured value. In this way, both normal measured values and unexpected measured values of the parameters are considered as regular measured values that are indistinguishable for the purpose of determining the condition of the structure. The estimator at block 444 then determines the (new) deviation indicators of the parameters for the new measurement instant. For this purpose, the (normalized) classification indicators are applied in input to the neural network of the estimator in order to obtain the new deviation indicators in output (dependent on the classification indicators for the current measurement instant and for the previous ones based on its memory capacity). The estimator then saves the new deviation indicators in the deviations repository (replacing their previous values). The decider at block 446 determines the condition indicator for the new measurement instant on the basis of the deviation indicators (extracted from the corresponding repository). For example, the global model is defined by the following formula:

$$Ic = \frac{1}{1+e^{-b+\Sigma_{J=1}^{Np} \omega_j \cdot Is_j}},$$

with $Ic$ the condition indicator (probability that the structure is in the anomalous condition), $b$ a bias constant, $Np$ the number of parameters, $\omega_j$ a weight associated with the $j$-th parameter and $Is_j$ the deviation indicator of the $j$-th parameter. The decider at block 448 compares the condition indicator with a (condition) threshold, for example, equal to 0.7-0.8. If the condition indicator is (possibly strictly) lower than the condition threshold, the structure is deemed to be in the normal condition. Therefore, the decider at block 450 sets the alarm indicator to false and adds the condition indicator and the alarm indicator to the conditions repository. Conversely, if the condition indicator is (possibly strictly) higher than the condition threshold, the structure is deemed to be in the anomalous condition. In this case, the decider at block 452 verifies whether the anomalous condition is new. The anomalous condition is considered new if, after the last verification of the structure (as indicated in the verifications repository), no alarm notification has been sent (as indicated in the conditions repository). In this case, the decider at block 454 sends a corresponding alarm notification to the specialized personnel, for example, by e-mail, in order to cause a (direct) verification of the structure as soon as possible; at the same time, the decider sets the alarm indicator to true, and adds the condition indicator and the alarm indicator to the conditions repository. Returning to block 452, if the anomalous condition is not new (*i.e.,* one or more alarm notifications have been sent after the last verification of the structure), the decider at block 456 compares the condition indicator just calculated for the current measurement instant with the condition indicator for a (previous) measurement instant corresponding to the sending of a last alarm notification (after the last verification of the structure). If a difference between the condition indicator for the current measurement instant and the condition indicator for the last alarm notification is (possibly strictly) higher than a (worsening) threshold, for example, 5-10% of the condition indicator for the last alarm notification, this means that the anomalous condition of the structure has worsened significantly. In this case as well, the decider at block 454 sends a corresponding (further) alarm notification to the specialized personnel (in order to urge the verification of the structure) and at the same time adds the condition indicator and the alarm indicator (set to true) to the conditions repository. Returning to block 456, if the difference between the condition indicator for the current measurement instant and the condition indicator for the last alarm notification is (possibly strictly) lower than the deterioration threshold, this means that the anomalous condition of the structure has not worsen significantly. In this case, the decider at block 458 merely adds the condition indicator and the alarm indicator (set to false) to the conditions repository, without however sending any further alarm notification. The activity flow merges at block 460 from block 450, from block 454 or from block 458. At this point, the virtualizer verifies whether a last new measurement instant has been processed. If not, the flow of activity returns to block 404 to repeat the same operations for a further new measurement instant. On the contrary, once all the new measurement instants have been processed, the flow of activity returns to block 402 waiting for a next collection event.

In a completely independent way, the process passes from block 462 to block 464 upon completion of each (current) verification of the structure by the specialized personnel; the current verification may have been scheduled (for example, periodically), requested in response to a traumatic event that might have damaged the structure (such as earthquake, storm, whirlwind and so on) or caused by an alarm notification (or more). The completion of the current verification is signaled manually by the specialized personnel, who inserts the outcome indicator of the current verification into the input interface of the adapter (actual condition of the structure being normal or anomalous). In response thereto, the adapter updates the verifications repository accordingly. Continuing to block 466, the adapter extracts the condition indicator and the deviation indicators for the measurement instant corresponding to the current verification, for example, the immediately preceding one (from the respective repositories). The adapter at block 468 updates the global model so as to minimize an estimation error between the condition indicator (estimated at the current verification) and the outcome indicator (actually detected during the current verification). For example, the global model is updated through the stochastic gradient descent method. Therefore, in the example at issue each weight of the global model is updated by applying the following formula:

$$\omega_j = \omega_j + Lr \cdot (Ie - Ic) \cdot Ie \cdot (1 - Ic) \cdot Is_j,$$

with $\omega_j$ the weight for the *j-th* parameter, *Lr* a constant that defines an adaptation rate of the global model, *Ie* the outcome indicator, and therefore (*Ie-Ic*) the estimation error, and *Is$_j$* the deviation indicator for the *j-th* parameter. The process then returns to block 462 waiting for a next verification notification.

Naturally, In order to satisfy local and specific requirements, a person skilled in the art may apply many logical and/or physical modifications and alterations to the present invention. More specifically, although this invention has been described with a certain degree of particularity with reference to one or more embodiments thereof, it should be understood that various omissions, substitutions and changes in the form and details as well as other embodiments are possible. Particularly, different embodiments of the present invention may be practiced even without the specific details (such as the numerical values) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the present invention may be incorporated in any other embodiment as a matter of general design choice. Moreover, items presented in a same group and different embodiments, examples or alternatives are not to be construed as *de facto* equivalent to each other (but they are separate and autonomous entities). In any case, each numerical value should be read as modified according to applicable tolerances; particularly, unless otherwise indicated, the terms "substantially", "about", "approximately" and the like should be understood as within 10%, preferably 5% and still more preferably 1%. Moreover, each range of numerical values should be intended as expressly specifying any possible number along the *continuum* within the range (comprising its end points). Ordinal or other qualifiers are merely used as labels to distinguish elements with the same name but do not by themselves connote any priority, precedence or order. The terms include, comprise, have, contain, involve and the like should be intended with an open, non-exhaustive meaning (*i.e.,* not limited to the recited items), the terms based on, dependent on, according to, function of and the like should be intended as a non-exclusive relationship (*i.e.,* with possible further variables involved), the term a/an should be intended as one or more items (unless expressly indicated otherwise), and the term means for (or any means-plus-function formulation) should be intended as any structure adapted or configured for carrying out the relevant function.

For example, an embodiment provides a method for monitoring a structure. However, the structure may be of any type (for example, any human artifact, such as a construction like a bridge, dam, building and the like, a natural structure, such as a mountain, arch, cave and the like, and so on).

In an embodiment, the method comprises the following steps under the control of a computing system. However, the computing system may be of any type (see below).

In an embodiment, the method comprises receiving (by the computing system), for each of one or more parameters relating to the structure, corresponding measured values of the parameter. However, the parameters may be in any number and of any type (for example, any state parameters, environmental parameters or their combination, partial, different and/or additional ones with respect to those mentioned above); moreover, the measured values of the parameters may be received in any way (for example, in push mode, in pull mode, in packets of any size or individually, and so on).

In an embodiment, the measured values of each parameter are measured continually at successive measurement instants by means of a corresponding sensor. However, the parameters may be measured by sensors of any type (for example, partial, different and/or additional one with respect to those mentioned above) and in any way (for example, with any frequency, either fixed or variable depending on the condition of the structure, and so on).

In an embodiment, the method comprises estimating (by the computing system) corresponding predicted values of the parameters for each current one of the measurement instants by means of corresponding current versions of corresponding local models. However, the local models may be of any type (for example, regression models, neural networks and the like, the same or different for the various parameters, and so on).

In an embodiment, the predicted value of each of the parameters for the current measurement instant is estimated according to the current version of the local model of the parameter applied to the measured values of the parameter at a plurality of the measurement instants preceding the current measurement instant. However, each local model may be applied to the measured values at any previous measurement instants (for example, contained in any time window, for all or only part of the measurement instants of the time window, uniformly distributed or not, and so on) and in any way (for example, indifferently, by weighing the measured values according to their age, and so on).

In an embodiment, the method comprises determining (by the computing system) corresponding classification indicators of the measured values of the parameters for each current measurement instant according to corresponding normal ranges and unexpected ranges of the parameters for the current measurement instant depending on the corresponding predicted values of the parameters. However, the measured values may be classified in any way (for example, through a decision tree, a neural network, and so on).

In an embodiment, the normal range and the unexpected range of each parameter for the current measurement instant comprise the predicted value and the normal range, respectively, of the parameter for the current measurement instant. However, the normal/unexpected ranges may be of any type (for example, of variable extent calculated in any way, of fixed extent, centered around the predicted value, asymmetrical with respect to the predicted value, and so on).

In an embodiment, the measured value of each parameter at the current measurement instant is classified as normal when within the corresponding normal range, as unexpected when outside the corresponding normal range and within the corresponding unexpected range and as anomalous when outside the corresponding unexpected range for the current measurement instant. However, the belonging of any measured value to the normal/unexpected ranges may be defined in any way (for example, extremes included, extremes excluded and so on).

In an embodiment, the method comprises adapting (by the computing system) the local model of each parameter in response to an adaptation condition determined according to one or more unexpected measured values of the parameter. However, the adaptation of the local model of each parameter may be triggered by any unexpected measured values of the parameter (for example, consecutive unexpected measured values in any number, unexpected measured values in any number in any time window, and so on).

In an embodiment, the local model of the parameter is adapted according to the normal measured values of the parameter at a plurality of the measurement instants preceding the current measurement instant. However, the local model may be adapted in any way (for example, through the least squares method, the stochastic gradient descent method, and so on) based on any number of normal measured values (for example, for all the measurement instants of the classifications window or only for part of them, distributed uniformly or not, indifferently, weighing the normal measured values according to their age, and so on); in any case, the possibility is not excluded of considering the unexpected measured values as well, at least in part (for example, sub-sampled, with lower weight and so on).

In an embodiment, the method comprises estimating (by the computing system) a condition indicator of the structure for each current measurement instant. However, the condition indicator may be estimated in any way (for example, through a neural network and a regression model, through a neural network only, through a regression model only, and so on).

In an embodiment, the condition indicator for the current measurement instant is estimated according to the classification indicators of the measured values of the parameters at one or more of the measurement instants comprising the current measurement instant. However, the condition indicator may be estimated in any way (for example, by estimating corresponding deviation indicators of the parameters for the current measurement instant and then the condition indicator from them, estimating corresponding overall deviation indicators for the measurement instants and then the condition indicator from them, estimating the condition indicator directly and so on) according to the classification indicators for any measurement instants (for example, contained in any time window, for all the measurement instants of the time window or only for part of them, uniformly distributed or not, indifferently, weighing the classification indicators according to their age, and so on).

In an embodiment, the method comprises issuing (by the computing system) an alarm notification according to the condition indicator for each current measurement instant being indicative of an anomalous condition determined according to one or more corresponding anomalous measured values of the parameters. However, the anomalous condition may be determined in any way according to any number of anomalous measured values (for example, when the condition indicator exceeds any threshold, when a number of measured values become anomalous, and so on). Moreover, the alarm notification may be of any type (for example, an e-mail, an SMS, a message on the monitor, an acoustic and/or visual signal, any combination thereof, and so on) and it may be issued according to the condition indicator in any way (for example, at the first detection of the anomalous condition and next only when the anomalous condition worsens significantly, only at the first detection of the anomalous condition, continuously or periodically until the structure is verified, and so on).

In an embodiment, the alarm notification is to cause human personnel to verify the structure. However, the verification may be performed at any time after the alarm notification by any human personnel in any way (for example, through inspections, load tests, stress tests, and so on).

Further embodiments provide additional advantageous features, which may however be omitted at all in a basic implementation.

Particularly, in an embodiment the method comprises calculating (by the computing system) the normal range and the unexpected range of each parameter for each current measurement instant according to the normal measured values of the parameter at a plurality of the measurement instants preceding the current measurement instant in a measurements window. However, the normal/unexpected ranges may be calculated in any way (for example, by applying different factors to a common basic offset, independently, and so on) according to the normal measured values for any previous measurement instants (for example, with the measurements window of any extent, for all the measurement instants of the measurements window or only for part of them, uniformly distributed or not, indifferently, weighing the normal measured values according to their age, and so on).

In an embodiment, the method comprises calculating (by the computing system) corresponding basic offsets of the parameters for each current measurement instant, the basic offset of each parameter for the current measurement instant being calculated according to the normal measured values of the parameter in the measurements window. However, the basic offset may be calculated in any way (for example, as a position index of dispersion indices moving along the measurements window, as a single dispersion index for the entire measurements window and so on).

In an embodiment, the method comprises setting (by the computing system) the normal range of each parameter for each current measurement instant to extend around the predicted value of the parameter for the current measurement instant by a normal offset equal to the basic offset of the parameter for the current measurement instant multiplied by a normal factor. However, the normal range may be set according to any normal factor (for example, of any value, single or with two values for the extent of the normal range above and below the predicted value, and so on).

In an embodiment, the method comprises setting (by the computing system) the unexpected range of each parameter for each current measurement instant to extend around the predicted value of the parameter for the current measurement instant by an unexpected offset equal to the basic offset of the parameter for the current measurement instant multiplied by an unexpected factor higher than the normal factor. However, the unexpected range may be set according to any unexpected factor (for example, of any value either in absolute terms or with respect to the normal factor, single or with two values for the extent of the unexpected range above and below the predicted value, and so on).

In an embodiment, the method comprises calculating (by the computing system) corresponding values of a dispersion index of the normal measured values of each parameter for each current measurement instant at a plurality of positions within the measurements window of a scanning window smaller than the measurements window. However, the dispersion index may be of any type (for example, standard deviation, variance, Poisson's index, coefficient of variation and so on); moreover, the measurements window may have any size (either in absolute terms or with respect to the measurements window) and it may be moved along the measurements window in any way (for example, with any fixed or variable stride, such as increasing moving away from the current measurement instant, and so on).

In an embodiment, the method comprises calculating (by the computing system) the basic offset of each parameter for each current measurement instant as a position index of the corresponding values of the dispersion index. However, the position index may be of any type (for example, mean, median, mode, and so on).

In an embodiment, the method comprises determining (by the computing system) corresponding deviation indicators of the measured values of the parameters from their predicted values for each current measurement instant. However, the deviation indicators may be determined in any way (for example, through a neural network, a regression model, and so on).

In an embodiment, the deviation indicator of each parameter for the current measurement instant is determined according to the classification indicators of the parameter at a plurality of the measurement instants comprising the current measurement instant in a classifications window. However, each deviation indicator may be determined according to the classification indicators at any measurement instants (for example, with the classifications window of any extent, for all the measurement instants of the classifications window or only for part of them, uniformly distributed or not, and so on) and in any way (for example, according to the classification indicators being normalized or as originally determined, indifferently, by weighing the classification indicators according to their age, and so on).

In an embodiment, the method comprises estimating (by the computing system) the condition indicator for each current measurement instant according to the deviation indicators for the current measurement instant. However, the condition indicator may be estimated in any way according to the deviation indicators (for example, through a logistic regression model, a neural network, and so on).

In an embodiment, the method comprises determining (by the computing system) the deviation indicator of each parameter for each current measurement instant according to the classification indicators of the parameter in the classifications window being normalized to a first value for the corresponding normal or unexpected measured values and to a second value for the corresponding anomalous measured values. However, the two values may be of any type (for example, 0 for normal/unexpected and 1 for anomalous, *vice-versa,* and so on) and they may be determined in any way (for example, before providing the classification indicators to the neural network, directly by a first layer thereof and so on).

In an embodiment, the method comprises estimating (by the computing system) the deviation indicators for each current measurement instant by means of a neural network. However, the neural network may be of any type (for example, a recurrent neural network, a delayed neural network, and so on).

In an embodiment, the neural network has been trained according to the normal measured values of the parameters. However, the neural network may have been trained in any way (for example, according to the stochastic gradient descent algorithm, higher order descent algorithms, extended Kalman filter and the like, according to the normal measurement values only or according to the anomalous measurement values as well, and so on).

In an embodiment, the method comprises estimating (by the computing system) the condition indicator for each current measurement instant by applying the deviation indicators for the current measurement instant to a global model based on corresponding weights for the parameters. However, the global model may be of any type (for example, a logistic regression model, such as based on the logit, probit, tobit and the like function, a neural network, and so on).

In an embodiment, the method comprises receiving (by the computing system) corresponding outcome indicators of each current one of a plurality of verifications of the structure. However, the verifications may be of any type (for example, triggered by alarm notifications, scheduled, requested in response to traumatic events and so on); moreover, the outcome indicators may be of any type (for example, normal/anomalous condition of the structure, actual condition indicator similar to the estimated ones, and so on) and it may be received in any way (for example, entered locally, downloaded or transmitted remotely, and so on).

In an embodiment, the method comprises updating (by the computing system) the global model in response to the outcome indicator of each current verification. However, the global model may be updated in response to the current verification in any way (for example, indiscriminately, only when the outcome indicator differs significantly from the corresponding condition indicator, and so on).

In an embodiment, the global model is updated according to a comparison between the outcome indicator of the current verification and the condition indicator for a measurement instant corresponding to the current verification. However, the measurement instant corresponding to the current verification may be determined in any way (for example, the last measurement instant, the measurement instant being the closest one or immediately preceding/following the instant of receipt of the outcome indicator of the current verification, of its start or of its completion, the measurement instant of the corresponding (last) alarm notification and so on).

In an embodiment, the method comprises updating (by the computing system) the global model in response to the outcome indicator of each current verification through reinforcement learning. However, the global model may be updated in any way (for example, through the stochastic gradient descent method, the least squares method, the maximum likelihood method, the method of moments and so on).

Generally, similar considerations apply if the same solution is implemented with an equivalent method (by using similar steps with the same functions of more steps or portions thereof, removing some non-essential steps or adding further optional steps); moreover, the steps may be performed in a different order, concurrently or in an interleaved way (at least in part).

An embodiment provides a computer program configured for causing a computing system to perform the above method when the computer program is executed on the computing system. An embodiment provides a computer program product comprising one or more computer readable storage media having program instructions collectively stored in the computer readable storage media, the program instructions being readable by a computer system to cause the computing system to perform the same method. However, the (computer) program may be implemented as a stand-alone module, as an plug-in for a pre-existing program (for example, a management application of the operations center) or even directly in the latter. It should be immediately apparent that it is also possible to deploy the same solution as a service that is accessed over a network (such as the Internet).

Generally, similar considerations apply if the program is structured in a different way, or if additional modules or functions are provided; likewise, the memory structures may be of other types, or they may be replaced with equivalent entities (not necessarily consisting of physical storage media). The program may take any form suitable to be used by any computing system (see below), thereby configuring the computing system to perform the desired operations; particularly, the program may be in the form of external or resident software, firmware, or microcode (either in object code or in source code, for example, to be compiled or interpreted). Moreover, it is possible to provide the program on any computer readable storage medium. The storage medium is any tangible medium (different from transitory signals *per se*) that may retain and store instructions for use by the computing system. For example, the storage medium may be of electronic, magnetic, optical, electromagnetic, infrared, or semiconductor type; examples of such storage medium are fixed disks (where the program may be pre-loaded), removable disks, memory keys (for example, USB) and the like. The program may be downloaded to the computing system from the storage medium or via a network (for example, the Internet, a wide area network and/or a local area network comprising transmission cables, optical fibers, wireless connections, network devices); one or more network adapters of the computing system receive the program from the network and forward it for storage into one or more storage devices of the computing system. In any case, the solution according to an embodiment of the present invention lends itself to be implemented even with a hardware structure (for example, by electronic circuits integrated on one or more chips of semiconductor material), or with a combination of software and hardware suitably programmed or otherwise configured.

An embodiment provides a computing system comprising means configured for performing the steps of the above method. An embodiment provides a computing system comprising a circuit (for example, any hardware suitably configured, for example, by software) for performing each of the steps of the same method. However, the system may be of any type (being programmable or not); for example, it is possible to use any computing (or data processing, instruction execution) system, such as a physical machine (like a server, a PC and the like), a virtual machine or a static or dynamic combination thereof (such as in a cloud computing environment).

An embodiment provides a monitoring system. However, the monitoring system may be of any type (for example, centralized, local, and so on).

In an embodiment, the monitoring system comprises the above computing system and one or more corresponding sensors for measuring the measured values of the parameters. However, the computing system may be of any type and the sensors may be in any number and of any type (see above).

In an embodiment, the monitoring system comprises communication means for providing the measured values of the parameters from the sensors to the computing system. However, the communication means may be implemented with any structure (for example, corresponding network cards, local connections, and so on).

In an embodiment, the communication means are configured for communicating over a telecommunication network. However, the communication network may be of any type (for example, global, local, geographic, cellular or satellite) and using any type of (wired or wireless) connections.

Generally, similar considerations apply if the computing system and the monitoring system each one has a different structure, comprises equivalent components or has other operative characteristics. In any case, every component thereof may be separated into more elements, or two or more components may be combined together into a single element; moreover, each component may be replicated to support the execution of the corresponding operations in parallel. Moreover, unless specified otherwise, any interaction between different components generally does not need to be continuous, and it may be either direct or indirect through one or more intermediaries.

**Claims**

1. A method (400) for monitoring a structure (105), wherein the method (400) comprises, under the control of a computing system (210):

    receiving (402), by the computing system (210), for each of one or more parameters relating to the structure (105), corresponding measured values of the parameter being measured continually at successive measurement instants by means of a corresponding sensor (205),
    estimating (408), by the computing system (210), corresponding predicted values of the parameters for each current one of the measurement instants by means of corresponding current versions of corresponding local models (330), the predicted value of each of the parameters for the current measurement instant being estimated according to the current version of the local model (330) of the parameter applied to the measured values of the parameter at a plurality of the measurement instants preceding the current measurement instant,
    determining (412-434), by the computing system (210), corresponding classification indicators of the measured values of the parameters for each current measurement instant according to corresponding normal ranges and unexpected ranges of the parameters for the current measurement instant depending on the corresponding predicted values of the parameters, the normal range and the unexpected range of each parameter for the current measurement instant comprising the predicted value and the normal range, respectively, of the parameter for the current measurement instant, wherein the measured value of each parameter at the current measurement instant is classified as normal when within the corresponding normal range, as unexpected when outside the corresponding normal range and within the corresponding unexpected range and as anomalous when outside the corresponding unexpected range for the current measurement instant,
    adapting (436-438), by the computing system (210), the local model (330) of each parameter in response to an adaptation condition determined according to one or more unexpected measured values of the parameter, the local model (330) of the parameter being adapted according to the normal measured values of the parameter at a plurality of the measurement instants preceding the current measurement instant,
    estimating (442-452), by the computing system (210), a condition indicator of the structure (105) for each current measurement instant according to the classification indicators of the measured values of the parameters at one or more of the measurement instants comprising the current measurement instant, the condition indicator for the current measurement instant being indicative of an anomalous condition determined according to one or more corresponding anomalous measured values of the parameters or of a normal condition otherwise, and
    issuing (454), by the computing system (210), an alarm notification in response to the anomalous condition to cause human personnel to verify the structure (115).

**2.** The method (400) according to claim 1, wherein the method (400) comprises:
calculating (412-424), by the computing system (210), the normal range and the unexpected range of each parameter for each current measurement instant according to the normal measured values of the parameter at a plurality of the measurement instants preceding the current measurement instant in a measurements window.

**3.** The method (400) according to claim 2, wherein the method (400) comprises:

calculating (412-420), by the computing system (210), corresponding basic offsets of the parameters for each current measurement instant, the basic offset of each parameter for the current measurement instant being calculated according to the normal measured values of the parameter in the measurements window,
setting (422), by the computing system (210), the normal range of each parameter for each current measurement instant to extend around the predicted value of the parameter for the current measurement instant by a normal offset equal to the basic offset of the parameter for the current measurement instant multiplied by a normal factor, and
setting (424), by the computing system (210), the unexpected range of each parameter for each current measurement instant to extend around the predicted value of the parameter for the current measurement instant by an unexpected offset equal to the basic offset of the parameter for the current measurement instant multiplied by an unexpected factor higher than the normal factor.

**4.** The method (400) according to claim 3, wherein the method (400) comprises:

calculating (412-416), by the computing system (210), corresponding values of a dispersion index of the normal measured values of each parameter for each current measurement instant at a plurality of positions within the measurements window of a scanning window smaller than the measurements window, and
calculating (420), by the computing system (210), the basic offset of each parameter for each current measurement instant as a position index of the corresponding values of the dispersion index.

**5.** The method (400) according to any claim from 1 to 4, wherein the method (400) comprises:

determining (442-444), by the computing system (210), corresponding deviation indicators of the measured values of the parameters from their predicted values for each current measurement instant, the deviation indicator of each parameter for the current measurement instant being determined according to the classification indicators of the parameter at a plurality of the measurement instants comprising the current measurement instant in a classifications window, and
estimating (446-452), by the computing system (210), the condition indicator for each current measurement instant according to the deviation indicators for the current measurement instant.

**6.** The method (400) according to claim 5, wherein the method (400) comprises:
determining (442-444), by the computing system (210), the deviation indicator of each parameter for each current measurement instant according to the classification indicators of the parameter in the classifications window being normalized to a first value for the corresponding normal or unexpected measured values and to a second value for the corresponding anomalous measured values.

**7.** The method (400) according to claim 5 or 6, wherein the method (400) comprises:
estimating (442-444), by the computing system (210), the deviation indicators for each current measurement instant by means of a neural network (340) being trained according to the normal measured values of the parameters.

**8.** The method (400) according to any claim from 5 to 7, wherein the method (400) comprises:
estimating (446), by the computing system (210), the condition indicator for each current measurement instant by applying the deviation indicators for the current measurement instant to a global model based on corresponding weights for the parameters.

**9.** The method (400) according to claim 8, wherein the method (400) comprises:

receiving (462), by the computing system (210), corresponding outcome indicators of each current one of a plurality of verifications of the structure (105), and
updating (466-468), by the computing system (210), the global model in response to the outcome indicator of each current verification, the global model being updated according to a comparison of the outcome indicator of the current verification and the condition indicator for a measurement instant corresponding to the current verification.

10. The method (400) according to claim 9, wherein the method (400) comprises:
updating (466-468), by the computing system (210), the global model in response to the outcome indicator of each current verification by means of reinforcement learning.

11. The method (400) according to any claim from 1 to 10, wherein the method (400) comprises:
issuing (452-456), by the computing system (210), the alarm notification in response to the anomalous condition being new, since no alarm notification has been issued after a last verification of the structure (105), or in response to the anomalous condition being not new according to a comparison of the condition indicator for the current measurement instant and the condition indicator corresponding to a last alarm notification after the last verification of the structure (105).

12. A computer program (300) configured for causing a computing system (210) to perform the method (400) according to any claim from 1 to 11 when the computer program (300) is executed on the computing system (210).

13. A computing system (210) comprising means (250) configured for performing the steps of the method according to any claim from 1 to 11.

14. A monitoring system (100) comprising:

the computing system (210) according to claim 13,
one or more corresponding sensors (205) for measuring the measured values of the parameters, and
communication means (255) for providing the measured values of the parameters from the sensors (205) to the computing system (210).

15. The monitoring system (100) according to claim 14, wherein the communication means (255) are configured for communicating over a telecommunication network (220).

**Patentansprüche**

1. Verfahren (400) zum Überwachen einer Struktur (105), wobei das Verfahren (400) unter der Steuerung eines Computersystems (210) umfasst:

Empfangen (402), durch das Computersystem (210), für jeden von einem oder mehreren Parametern, die sich auf die Struktur (105) beziehen, entsprechender Messwerte des Parameters, die kontinuierlich zu aufeinander folgenden Messzeitpunkten mittels eines entsprechenden Sensors (205) gemessen werden,
Schätzen (408), durch das Computersystem (210), entsprechender vorhergesagter Werte der Parameter für jeden aktuellen der Messzeitpunkte mittels entsprechender aktueller Versionen entsprechender lokaler Modelle (330), wobei der vorhergesagte Wert jedes der Parameter für den aktuellen Messzeitpunkt gemäß der aktuellen Version des lokalen Modells (330) des Parameters geschätzt wird, das auf die Messwerte des Parameters zu einer Mehrzahl der Messzeitpunkte vor dem aktuellen Messzeitpunkt angewendet wird,
Bestimmen (412-434), durch das Computersystem (210), entsprechender Klassifizierungsindikatoren der Messwerte der Parameter für jeden aktuellen Messzeitpunkt gemäß entsprechenden normalen Bereichen und unerwarteten Bereichen der Parameter für den aktuellen Messzeitpunkt in Abhängigkeit von den entsprechenden vorhergesagten Werten der Parameter, wobei der normale Bereich und der unerwartete Bereich jedes Parameters für den aktuellen Messzeitpunkt jeweils den vorhergesagten Wert und den normalen Bereich des Parameters für den aktuellen Messzeitpunkt umfassen, wobei der Messwert jedes Parameters zu dem aktuellen Messzeitpunkt als normal klassifiziert wird, wenn er innerhalb des entsprechenden normalen Bereichs liegt, als unerwartet, wenn er außerhalb des entsprechenden normalen Bereichs und innerhalb des entsprechenden unerwarteten Bereichs liegt, und als anomal, wenn er außerhalb des entsprechenden unerwarteten Bereichs für den aktuellen Messzeitpunkt liegt,
Anpassen (436-438), durch das Computersystem (210), des lokalen Modells (330) jedes Parameters in Reaktion auf eine Anpassungsbedingung, die gemäß einem oder mehreren unerwarteten Messwerten des Parameters bestimmt wird, wobei das lokale Modell (330) des Parameters gemäß den normalen Messwerten des Parameters zu einer Mehrzahl von Messzeitpunkten vor dem aktuellen Messzeitpunkt angepasst wird,

Schätzen (442-452), durch das Computersystem (210), eines Zustandsindikators der Struktur (105) für jeden aktuellen Messzeitpunkt gemäß den Klassifizierungsindikatoren der Messwerte der Parameter zu einem oder mehreren der Messzeitpunkte, die den aktuellen Messzeitpunkt umfassen, wobei der Zustandsindikator für den aktuellen Messzeitpunkt einen anomalen Zustand, der gemäß einem oder mehreren entsprechenden anomalen Messwerten der Parameter bestimmt wird, oder ansonsten einen normalen Zustand anzeigt, und

Ausgeben (454), durch das Computersystem (210), einer Alarmmeldung als Reaktion auf den anomalen Zustand , um menschliches Personal zu veranlassen, die Struktur (115) zu überprüfen.

2. Verfahren (400) nach Anspruch 1, wobei das Verfahren (400) umfasst:
Berechnen (412-424), durch das Computersystem (210), des normalen Bereichs und des unerwarteten Bereichs jedes Parameters für jeden aktuellen Messzeitpunkt gemäß den normalen Messwerten des Parameters zu einer Mehrzahl von Messzeitpunkten, die dem aktuellen Messzeitpunkt in einem Messfenster vorausgehen.

3. Verfahren (400) nach Anspruch 2, wobei das Verfahren (400) umfasst:

Berechnen (412-420), durch das Computersystem (210), entsprechender Basisoffsets der Parameter für jeden aktuellen Messzeitpunkt, wobei der Basisoffset jedes Parameters für den aktuellen Messzeitpunkt gemäß den normalen Messwerten des Parameters in dem Messfenster berechnet wird,

Einstellen (422), durch das Computersystem (210), des normalen Bereichs jedes Parameters für jeden aktuellen Messzeitpunkt, damit sich dieser um den vorhergesagten Wert des Parameters für den aktuellen Messzeitpunkt um einen normalen Offset erweitert, der gleich dem Basisoffset des Parameters für den aktuellen Messzeitpunkt multipliziert mit einem normalen Faktor ist, und

Einstellen (424), durch das Computersystem (210), des unerwarteten Bereichs jedes Parameters für jeden aktuellen Messzeitpunkt, damit sich dieser um den vorhergesagten Wert des Parameters für den aktuellen Messzeitpunkt um einen unerwarteten Offset erweitert, der gleich dem Basisoffset des Parameters für den aktuellen Messzeitpunkt multipliziert mit einem unerwarteten Faktor ist, der höher als der normale Faktor ist.

4. Verfahren (400) nach Anspruch 3, wobei das Verfahren (400) umfasst:

Berechnen (412-416), durch das Computersystem (210), entsprechender Werte eines Dispersionsindex der normalen Messwerte jedes Parameters für jeden aktuellen Messzeitpunkt an einer Mehrzahl von Positionen innerhalb des Messfensters eines Abtastfensters, das kleiner als das Messfenster ist, und

Berechnen (420), durch das Computersystem (210), des Basisoffsets jedes Parameters für jeden aktuellen Messzeitpunkt als Positionsindex der entsprechenden Werte des Dispersionsindex.

5. Verfahren (400) nach einem der Ansprüche 1 bis 4, wobei das Verfahren (400) umfasst:

Bestimmen (442-444), durch das Computersystem (210), entsprechender Abweichungsindikatoren der Messwerte der Parameter von ihren vorhergesagten Werten für jeden aktuellen Messzeitpunkt, wobei der Abweichungsindikator jedes Parameters für den aktuellen Messzeitpunkt gemäß den Klassifizierungsindikatoren des Parameters bei einer Mehrzahl der Messzeitpunkte bestimmt wird, die den aktuellen Messzeitpunkt in einem Klassifizierungsfenster umfassen, und

Schätzen (446-452), durch das Computersystem (210), des Zustandsindikators für jeden aktuellen Messzeitpunkt gemäß den Abweichungsindikatoren für den aktuellen Messzeitpunkt.

6. Verfahren (400) nach Anspruch 5, wobei das Verfahren (400) umfasst:
Bestimmen (442-444), durch das Computersystem (210), des Abweichungsindikators jedes Parameters für jeden aktuellen Messzeitpunkt gemäß den Klassifizierungsindikatoren des Parameters in dem Klassifizierungsfenster, das auf einen ersten Wert für die entsprechenden normalen oder unerwarteten Messwerte und auf einen zweiten Wert für die entsprechenden anomalen Messwerte normalisiert ist.

7. Verfahren (400) nach Anspruch 5 oder 6, wobei das Verfahren (400) umfasst:
Schätzen (442-444), durch das Computersystem (210), der Abweichungsindikatoren für jeden aktuellen Messzeitpunkt mittels eines neuronalen Netzes (340), das gemäß den normalen Messwerten der Parameter trainiert wird.

8. Verfahren (400) nach einem der Ansprüche 5 bis 7, wobei das Verfahren (400) umfasst:
Schätzen (446), durch das Computersystem (210), des Zustandsindikators für jeden aktuellen Messzeitpunkt durch Anwenden der Abweichungsindikatoren für den aktuellen Messzeitpunkt auf ein globales Modell auf Grundlage entsprechender Gewichte für die Parameter.

9. Verfahren (400) nach Anspruch 8, wobei das Verfahren (400) umfasst:

Empfangen (462), durch das Computersystem (210), entsprechender Ergebnisindikatoren jeder aktuellen einer Mehrzahl von Überprüfungen der Struktur (105), und
Aktualisieren (466-468), durch das Computersystem (210), des globalen Modells in Reaktion auf den Ergebnisindikator jeder aktuellen Überprüfung, wobei das globale Modell gemäß einem Vergleich des Ergebnisindikators der aktuellen Überprüfung und des Zustandsindikators für einen Messzeitpunkt, der der aktuellen Überprüfung entspricht, aktualisiert wird.

10. Verfahren (400) nach Anspruch 9, wobei das Verfahren (400) umfasst:
Aktualisieren (466-468), durch das Computersystem (210), des globalen Modells in Reaktion auf den Ergebnisindikator jeder aktuellen Überprüfung mittels Verstärkungslernen.

11. Verfahren (400) nach einem der Ansprüche 1 bis 10, wobei das Verfahren (400) umfasst:
Ausgeben (452-456), durch das Computersystem (210), der Alarmbenachrichtigung als Reaktion darauf, dass der anomale Zustand neu ist, da nach einer letzten Überprüfung der Struktur (105) keine Alarmbenachrichtigung ausgegeben wurde, oder als Reaktion darauf, dass der anomale Zustand gemäß einem Vergleich des Zustandsindikators für den aktuellen Messzeitpunkt und des Zustandsindikators entsprechend einer letzten Alarmbenachrichtigung nach der letzten Überprüfung der Struktur (105) nicht neu ist.

12. Computerprogramm (300), das dazu eingerichtet ist, ein Computersystem (210) zu veranlassen, das Verfahren (400) nach einem der Ansprüche 1 bis 11 durchzuführen, wenn das Computerprogramm (300) auf dem Computersystem (210) ausgeführt wird.

13. Computersystem (210), das Mittel (250) umfasst, die zum Durchführen der Schritte des Verfahrens nach einem der Ansprüche 1 bis 11 eingerichtet sind.

14. Überwachungssystem (100), umfassend:

das Computersystem (210) nach Anspruch 13,
einen oder mehrere entsprechende Sensoren (205) zum Messen der Messwerte der Parameter, und
Kommunikationsmittel (255) zum Bereitstellen der Messwerte der Parameter von den Sensoren (205) an das Computersystem (210).

15. Überwachungssystem (100) nach Anspruch 14, wobei die Kommunikationsmittel (255) für die Kommunikation über ein Telekommunikationsnetz (220) eingerichtet sind.

**Revendications**

1. Un procédé (400) de surveillance d'une structure (105), dans lequel le procédé (400) comprenant, sous le contrôle d'un système informatique (210):

recevoir (402), par le système informatique (210), pour chacun d'un ou plusieurs paramètres relatifs à la structure (105), des valeurs mesurées correspondantes du paramètre étant mesurées en continu à des instants de mesure successifs au moyen d'un capteur correspondant (205),
estimer (408), par le système informatique (210), des valeurs prédites correspondantes des paramètres pour chacun courant des instants de mesure au moyen de versions courantes correspondantes de modèles locaux correspondants (330), la valeur prédite de chacun des paramètres pour l'instant de mesure courant étant estimée selon la version courante du modèle local (330) du paramètre appliquée aux valeurs mesurées du paramètre à une pluralité d'instants de mesure précédant l'instant de mesure courant,
déterminer (412-434), par le système informatique (210), des indicateurs de classification correspondants des valeurs mesurées des paramètres pour chaque instant de mesure courant selon des plages normales et des plages inattendues correspondantes des paramètres pour l'instant de mesure courant dépendant des valeurs prédites correspondantes des paramètres, la plage normale et la plage inattendue de chaque paramètre pour l'instant de mesure courant comprenant la valeur prédite et la plage normale, respectivement, du paramètre pour l'instant de mesure courant, dans lequel la valeur mesurée de chaque paramètre à l'instant de mesure courant est classée comme normale lorsque dans la plage normale correspondante, comme inattendue lorsque en dehors de la plage normale correspondante et dans la plage inattendue correspondante et comme anormale lorsque en dehors de la plage inattendue correspondante pour l'instant de mesure courant,

adapter (436-438), par le système informatique (210), le modèle local (330) de chaque paramètre en réponse à une condition d'adaptation déterminée selon une ou plusieurs valeurs mesurées inattendues du paramètre, le modèle local (330) du paramètre étant adapté selon les valeurs mesurées normales du paramètre à une pluralité d'instants de mesure précédant l'instant de mesure courant,

estimer (442-452), par le système informatique (210), un indicateur d'état de la structure (105) pour chaque instant de mesure courant selon les indicateurs de classification des valeurs mesurées des paramètres à un ou plusieurs des instants de mesure comprenant l'instant de mesure courant, l'indicateur d'état pour l'instant de mesure courant étant indicatif d'un état anormal déterminé selon une ou plusieurs valeurs mesurées anormales correspondantes des paramètres ou d'un état normal dans le cas contraire, et

émettre (454), par le système informatique (210), une notification d'alarme en réponse à la condition anormale pour amener du personnel humain à vérifier la structure (115).

**2.** Le procédé (400) selon la revendication 1, dans lequel le procédé (400) comprend:
calculer (412-424), par le système informatique (210), la plage normale et la plage inattendue de chaque paramètre pour chaque instant de mesure courant selon les valeurs normales mesurées du paramètre à une pluralité d'instants de mesure précédant l'instant de mesure courant dans une fenêtre de mesures.

**3.** Le procédé (400) selon la revendication 2, dans lequel le procédé (400) comprend:

calculer (412-420), par le système informatique (210), des décalages de base correspondants des paramètres pour chaque instant de mesure courant, le décalage de base de chaque paramètre pour l'instant de mesure courant étant calculé selon les valeurs mesurées normales du paramètre dans la fenêtre de mesures,

établir (422), par le système informatique (210), la plage normale de chaque paramètre pour chaque instant de mesure courant à s'étendre autour de la valeur prédite du paramètre pour l'instant de mesure courant par un décalage normal égal au décalage de base du paramètre pour l'instant de mesure courant multiplié par un facteur normal, et

établir (424), par le système informatique (210), la plage inattendue de chaque paramètre pour chaque instant de mesure courant à s'étendre autour de la valeur prédite du paramètre pour l'instant de mesure courant par un décalage inattendu égal au décalage de base du paramètre pour l'instant de mesure courant multiplié par un facteur inattendu supérieur au facteur normal.

**4.** La procédé (400) selon la revendication 3, dans lequel le procédé (400) comprend:

calculer (412-416), par le système informatique (210), des valeurs correspondantes d'un indice de dispersion des valeurs mesurées normales de chaque paramètre pour chaque instant de mesure courant à une pluralité de positions dans la fenêtre de mesure d'une fenêtre de scannérisation plus petite que la fenêtre de mesure, et

calculer (420), par le système informatique (210), le décalage de base de chaque paramètre pour chaque instant de mesure courant comme un indice de position des valeurs correspondantes de l'indice de dispersion.

**5.** Le procédé (400) selon l'une quelconque des revendications 1 à 4, dans lequel le procédé (400) comprend:

déterminer (442-444), par le système informatique (210), des indicateurs d'écart correspondants des valeurs mesurées des paramètres par rapport à leurs valeurs prédites pour chaque instant de mesure courant, l'indicateur d'écart de chaque paramètre pour l'instant de mesure courant étant déterminé selon les indicateurs de classification du paramètre à une pluralité d'instants de mesure comprenant l'instant de mesure courant dans une fenêtre de classification, et

estimer (446-452), par le système informatique (210), l'indicateur d'état pour chaque instant de mesure courant selon les indicateurs d'écart pour l'instant de mesure courant.

**6.** Le procédé (400) selon la revendication 5, dans lequel le procédé (400) comprend:
déterminer (442-444), par le système informatique (210), l'indicateur d'écart de chaque paramètre pour chaque instant de mesure courant selon les indicateurs de classification du paramètre dans la fenêtre de classifications étant normalisés à une première valeur pour les valeurs mesurées normales ou inattendues correspondantes et à une seconde valeur pour les valeurs mesurées anormales correspondantes.

**7.** Le procédé (400) selon la revendication 5 ou 6, dans lequel le procédé (400) comprend:
estimer (442-444), par le système informatique (210), les indicateurs d'écart pour chaque instant de mesure courant au moyen d'un réseau neuronal (340) étant entraîné selon les valeurs mesurées normales des paramètres.

**8.** La procédé (400) selon l'une quelconque des revendications 5 à 7, dans lequel le procédé (400) comprend:
estimer (446), par le système informatique (210), l'indicateur de condition pour chaque instant de mesure courant en appliquant les indicateurs d'écart pour l'instant de mesure courant à un modèle global basé sur des poids correspondants pour les paramètres.

**9.** Le procédé (400) selon la revendication 8, dans lequel le procédé (400) comprend:

recevoir (462), par le système informatique (210), des indicateurs de résultat correspondants de chaque vérification courante d'une pluralité de vérifications de la structure (105), et
ajuster (466-468), par le système informatique (210), le modèle global en réponse à l'indicateur de résultat de chaque vérification courante, le modèle global étant ajusté selon une comparaison de l'indicateur de résultat de la vérification courant et de l'indicateur de condition pour un instant de mesure correspondant à la vérification courante.

**10.** Le procédé (400) selon la revendication 9, dans lequel le procédé (400) comprend:
ajuster (466-468), par le système informatique (210), le modèle global en réponse à l'indicateur de résultat de chaque vérification courante au moyen d'apprentissage par renforcement.

**11.** Le procédé (400) selon l'une quelconque des revendications 1 à 10, dans lequel le procédé (400) comprend:
émettre (452-456), par le système informatique (210), la notification d'alarme en réponse à la condition anormale étant nouvelle, puisqu'aucune notification d'alarme n'a été émise après une dernière vérification de la structure (105), ou en réponse à la condition anormale n'étant pas nouvelle selon une comparaison de l'indicateur de condition pour l'instant de mesure courant et l'indicateur de condition correspondant à une dernière notification d'alarme après la dernière vérification de la structure (105).

**12.** Un programme informatique (300) configuré pour amener un système informatique (210) à exécuter le procédé (400) selon l'une quelconque des revendications 1 à 11 lorsque le programme informatique (300) est exécuté sur le système informatique (210).

**13.** Un système informatique (210) comprenant des moyens (250) configurés pour réaliser les étapes du procédé selon l'une quelconque des revendications 1 à 11.

**14.** Un système de surveillance (100) comprenant :

le système informatique (210) selon la revendication 13,
un ou plusieurs capteurs correspondants (205) pour mesurer les valeurs mesurées des paramètres, et
des moyens de communication (255) pour fournir les valeurs mesurées des paramètres provenant des capteurs (205) au système informatique (210).

**15.** Le système de surveillance (100) selon la revendication 14, dans lequel les moyens de communication (255) sont configurés pour communiquer sur un réseau de télécommunication (220).

## FIG.1A

## FIG.1B

FIG.1C

FIG.1D

FIG.1E

FIG.1F

235 μP

240 ROM

245 RAM

Bus

250

230

Peripherals

255

200

210

220 Network

215

225

205

205

FIG.2

FIG.3

FIG.4A

FIG.4B

**EP 4 413 346 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180313725 A